# FASCICULE DE BREVET EUROPEEN

(11) **EP 0 479 754 B1**
(45) Date de publication et mention de la délivrance du brevet: **19.08.1998**
(21) Numéro de dépôt: 91870152.5
(22) Date de dépôt: 03.10.1991
(51) Int. Cl.: C08F 6/02

(54) **Procédé de décoloration de polymères résineux du type vinylaromatique-diène conjugué**
Verfahren zum Entfärben von Polymerharzen vinylaromatischen Verbindungen und konjugierten Dienen
Process for the decolouration of resinous polymers of the vinyl aromatic/conjugated diene type

(30) Priorité: 04.10.1990 BE 9000942
(43) Date de publication de la demande: 08.04.1992
(73) Titulaire: FINA RESEARCH S.A., B-7181 Feluy (BE)
(72) Inventeur: Lanza, Emmanuel, B-1410 Waterloo (BE); Naveau, Jean Marie Marcelle Guillaume, B-1400 Nivelles (BE)

(56) Documents cités:
- FR-A- 1 104 314
- FR-A- 1 149 159
- PLASDOC - CENTRAL PATENTS INDEX - BASIC ABSTRACTS JOURNAL, 20 Janvier 1988, LONDON GB Section A, week 8746, A0586, no 87-325255/46 & JP-A-62 232 402 (ASAHI CHEMICAL) 12-10-1987
- PLASDOC - CENTRAL PATENTS INDEX - BASIC ABSTRACTS JOURNAL, 7 Juin 1989, LONDON GB Section A, week 8915, A0389, no 89-10936 & JP-A-01 054 016 (ASAHI CHEMICAL) 01-03-1989

## Description

La présente invention se rapporte à un procédé de décoloration de polymères résineux du type copolymère bloc vinylaromatique-diène conjugué. En particulier, la présente invention se rapporte à un procédé de décoloration de tels copolymères obtenus au départ d'une étape d'initiation de la (co)polymérisation effectuée au moyen de catalyseurs à base de métal alcalin.

Le brevet français n° 1.149.159 décrit un procédé pour enlever la couleur foncée due aux catalyseurs d'hydrogénation des polymères caoutchouteux hydrogénés au moyen d'un acide minéral ou d'un acide mono ou polycarboxylique ; il en résulte des polymères transparents mais jaunâtres, ayant une transmittance améliorée après un traitement pouvant durer de au moins 1 heure jusque 36 heures.

Or, en ce qui concerne les copolymères de types résineux, notamment ceux décrits dans les brevets US 3.639.517 et 4.091.053, la coloration est principalement due aux agents d'initiation.

Il est très important, non seulement pour l'aspect, mais encore pour des utilisations dans le domaine alimentaire, de faire disparaître cette coloration jaunâtre, et d'obtenir des copolymères parfaitement transparents et décolorés.

On connaît des méthodes pour obtenir des copolymères transparents en traitant les solutions de copolymères avec du CO₂ et de l'eau. Cependant, cela nécessite une distillation du solvant pour le séparer de l'eau et du CO₂ avant qu'il ne soit recyclé pour la polymérisation, car ces produits agiraient sinon comme poisons pour l'initiateur.

Cependant, il faut penser qu'en plus de la transparence et de la décoloration, il faut maintenir au polymère toutes ses propriétés mécaniques de résistance au choc, ce qui n'est pas assuré par les solutions préconisées.

On sait également qu'il faut ajouter à ces compositions un additif antioxydant pour stabiliser la phase butadiène lors de l'étape de transformation du polymère. De fait, les températures pratiquées lors de cette étape peuvent entraîner une dégradation de la phase polybutadiène; cependant ce type d'additif peut évidemment provoquer une coloration de la matière polymérique, et il est donc souhaitable de réduire la quantité d'additif anti-oxydant, voire de ne pas devoir en ajouter.

Le brevet FR-A-1104314 décrit comme connu l'usage des acides organiques tels que l'acide acétique et d 'autres acides gras pour détruire l'excès de métal alcalin n 'ayant pas réagi à la fin de la réaction de polymérisation. Ce document divulgue par ailleurs la destruction de catalyseur par 2 moles au moins d'une solution aqueuse d 'acide acétique contenant au moins 1 mole d 'acide et au plus 3 moles d 'eau par mole de métal alcalin; dans le procédé de polymérisation, la présence de divers éthers comme agent de modification permet d'obtenir des produits incolores.

On a également proposé dans le brevet EP 84.795 de traiter les copolymères avec des diacides carboxyliques. Ce type de procédé permet de satisfaire pratiquement toutes les conditions de décoloration énoncées ci-dessus, mais sans apporter la solution au problème de l'ajout d'un additif anti-oxydant.

On a alors proposé dans le brevet EP-309434 de traiter les copolymères avec des acides monocarboxyliques contenant du soufre chimiquement lié. Ce type de procédé permet de réduire considérablement l'appoint en additif anti-oxydant. Néanmoins, ce procédé est rarement utilisé à l'échelle industrielle, car la majorité de ces acides sont solides à température ambiante et ont même des points de fusion supérieurs à 100°C et ils sont quasi insolubles dans la plupart des solvants usuels. Ceci entraîne des difficultés considérables lors de la mise en oeuvre des copolymères ce qui se traduit soit par un bouchage des canalisations soit par une dégradation rapide des copolymères.

Il serait donc souhaitable de disposer d'un procédé pour traiter les copolymères vinylaromatique-diène conjugué de manière à leur assurer la transparence parfaite, à leur maintenir des propriétés de résistance au choc appropriées, à permettre le contact avec les matières alimentaires, à leur apporter une fonction anti-oxydante sans nécessiter un appoint en additifs anti-oxydants et enfin à permettre une mise en oeuvre aisée des copolymères.

La présente invention a pour objet un procédé pour décolorer les copolymères de vinylaromatique-diène conjugué de manière à satisfaire aux critères énoncés ci-dessus.

La présente invention a pour objet un procédé de décoloration de polymères vinylaromatique-diène conjugué qui permette d'obtenir les copolymères parfaitement transparents, ayant de bonnes propriétés de résistance au choc, et permettant leur utilisation dans le domaine alimentaire.

La présente invention a également pour objet un procédé de décoloration de polymères vinylaromatique-diène conjugué qui permette de réduire l'apport en additif anti-oxydant.

La présente invention a également pour objet un procédé de décoloration de polymères vinylaromatique-diène conjugué qui permette une mise en oeuvre aisée des copolymères.

Le procédé de la présente invention pour décolorer les copolymères vinylaromatique-diène conjugué obtenus au départ de catalyseurs à base de métal alcalin lors de l'étape d'initiation, est caractérisé en ce que l'on traite le copolymère avec un acide monocarboxylique de formule générale R-COOH dans laquelle R est un radical hydrocarboné comprenant de 2 à 4 atomes de carbone comprenant les radicaux aliphatiques linéaires ou branchés, cycloaliphatiques ou alcéniques.

Les acides monocarboxyliques utilisés dans le cadre de l'invention permettent une mise en oeuvre aisée des copolymères grâce à leur faible température de fusion et/ou leur excellente solubilité dans au moins un solvant utilisable dans le procédé.

Le procédé de la présente invention est applicable aux copolymères aussi bien de type résineux que de type élastomérique préparés par polymérisation anionique en solution de monomères vinylaromatiques et de diène conjugué, en présence d'initiateurs de type composé de métal alcalin, la polymérisation s'effectuant de manière séquentielle, étant entendu qu'une ou plusieurs branches de ce copolymère séquencé puissent être constituées par un copolymère statistique.

Ce type de polymérisation s'effectue généralement en solution en présence d'un solvant et d'un initiateur de type composé de métal alcalin. En plus, en cours de polymérisation, on ajoute souvent des agents de couplage, de manière à coupler les polymères.

Les copolymères ainsi formés se trouvent le plus souvent sous forme linéaire ou radiale, mais d'une coloration inacceptable pour les utilisations désirées.

Les procédés de polymérisation des copolymères que l'on traite avec le procédé de l'invention sont parfaitement décrits dans les brevets US 3.619.537 et 4.091.053 et dans les brevets EP 84.795 et 270.515. Ces procédés de polymérisation peuvent d'ailleurs être facilement résumés de la manière suivante.
On effectue la polymérisation en solution à une température comprise entre - 100°C et + 150°C, en présence d'un solvant et à une pression suffisante pour maintenir le milieu en phase liquide. Les solvants utilisés peuvent être paraffiniques, cycloparaffiniques ou aromatiques. Le plus souvent, on utilise du cyclohexane ou un mélange d'hexane et de cyclohexane.

Dans le cas d'une polymerisation effectuée au moyen d'agents de couplage, on forme d'abord un bloc d'un polymère non-élastomérique en chargeant du monomère vinylaromatique avec une certaine quantité d'initiateur organolithium, pour former des longues chaînes de polymères vivants ayant un atome terminal de lithium sur la chaîne.

On met en contact ensuite les chaînes de polymères vivants avec des monomères de diènes conjugués pour former des chaînes de copolymères ayant des blocs élastomériques et non-élastomériques.

Ensuite, les copolymères de structure S-B (S = vinylaromatique, B = diène conjugué) sont mis en contact avec des agents de couplage pour former des copolymères de structure S-B-X-B-S dans le cas de structure linéaire, où X est le résidu de l'agent de couplage.

Dans le cas d'une polymerisation effectuée sans agent de couplage, on forme un copolymère bloc séquencé en chargeant initialement un des deux monomères S, B ou un mélange des deux monomères S/B avec une certaine quantité d'initiateur organolithium afin d'amorcer la polymérisation. On charge ensuite successivement et dans l'ordre désiré un des monomères S ou B ou un mélange des monomères S/B.

Il entendu que l'on peut former des copolymères à structure radiale ou linéaire, et que les blocs peuvent être formés de homopolymères purs ou de copolymères statistiques.

Quels que soient les copolymères obtenus selon les divers procédés de polymérisation anionique en solution, le procédé de l'invention est applicable pour décolorer ces copolymères.

Comme monomère de diène conjugué, on peut utiliser ceux ayant de 4 à 12 atomes de carbone, comme le 1,3-butadiène, l'isoprène, le 2,3-diméthyl-1,3 butadiène, le piperylène, le 3-butyl-1,3-octadiène et autres analogues. Comme monomère vinylaromatique, on utilise le styrène, le alpha-méthylstyrène, le vinylnaphtalène, le vinytoluène, et autres analogues.

Comme le procédé s'applique aussi bien aux copolymères résineux qu'aux élastomériques, le rapport pondéral diène conjugué/vinyl aromatique peut varier dans de larges limites et notamment de 1/99 à 85/15.

Les initiateurs de type composé de métal alcalin qui peuvent être utilisés comprennent les composés organolithiques suivants : l'éthyllithium, le propyllithium, le butyllithium, l'amyllithium, l'hexyllithium, le cyclohexyllithium, le phényllithium, le tollyllithium, le naphtyllithium et leurs isomères en particulier le sec-butyllithium et le tert-butyllithium.

Les agents de couplage sont choisis parmi les composés multivinylaromatiques, multiépoxydes, multiisocyanates, multiimines, multialdéhydes, multicétones, polyhalogénures comme les tétrahalogénures de silicium et les halosilanes, les multianhydrides et les multiesters, ainsi que des combinaisons de plusieurs types d'agents de couplage.

Des exemples appropriés de composés multivinylaromatiques comprennent les divinylbenzène, 1,2,4-trivinylbenzène, 1,3-divinylnaphthalène, 1,3,5-trivinylnaphthalène, 2,4-divinylbiphényl, et analogues.

On utilise également des composés multiépoxydiques. En général, on utilise des polymères d'hydrocarbures époxydés comme le polybutadiène liquide époxydé et les huiles végétales époxydées comme l'huile de soja époxydée et l'huile de lin époxydée. On peut utiliser d'autres composés époxy comme le 1,2;5,6;9,10-triépoxydécane et analogue.

Des exemples de multiisocyanate comprennent les benzène-1,2,4-triisocyanate, naphthalène-1,2,5,7-tétraisocyanate, et analogues.

Des exemples de multiimines comprennent les oxydes ou sulfides de triaziridinyl phosphine tels que l'oxyde de tri(1-aziridinyl) phosphine, l'oxyde de tri(2-méthyl-1-aziridinyl) phosphine, le sulfure de (2-éthyl-3-décyl-1-aziridinyl) phosphine, et analogues.

Comme exemples de multialdéhydes on peut citer le 1,4,7-naphthalènetricarboxaldéhyde, le 1,7,9-anthracène - tricarboxaldéhyde, le 1,1,5-pentanetricarboxaldéhyde, et analogues.

Comme multicétones, on peut citer le 1,4,9,10-anthracènetétrone, le 2,3-diacétonylcyclohexane, et analogues.

Comme exemples de multianhydrides, on peut citer le dianhydride pyromellitique, des copolymères styrène-anhydride maléique, et analogues.

Des exemples de multiesters comprennent les diéthyladipate, triéthylcitrate, 1,3,5-tricarbéthoxybenzène, et analogues.

Parmi les polyhalogénures, on peut citer le tétrahalogénure de silicium tel que SiCl₄, SiBr₄ et SiI₄, le trihalosilane comme le trifluorosilane, le trichlorosilane, le trichloroéthylsilane, le tribromobenzylsilane, et analogues, et les hydrocarbures halogéno-substitués comme le 1,3,5-tri(bromométhyl)benzène, le 2,5,6,9-tétrachloro-3,7-décadiène, et analogues.

Des exemples de composés ayant plus d'un type de groupe fonctionnel comprennent le 1,3-dichloro-2-propanone, le 2,2-dibromo-3-décanone, le 3,5,5-trifluoro-4-octanone, le 2,4-dibromo-3-pentanone, le 1,2,4,5-diépoxy-3-pentanone, 1,2;4,5-diépoxy-3-hexanone, le 1,2;11,12-diépoxy-8-pentadécanone, le 1,3;18,19-diépoxy-7,14-eicosanedione, et analogues.

On peut aussi avoir d'autres halogénures de métaux comme ceux d'étain, plomb ou germanium, ainsi que les multialkoxydes de métaux comme le tétraéthoxyde de Si.

On peut utiliser le type difonctionnel de ces agents lorsque l'on désire un polymère linéaire plutôt qu'un polymère branché.

Généralement, la quantité totale d'agent de couplage est inférieure à 1,5 phr (parties par 100 parties de caoutchouc).

Le procédé de l'invention est applicable d'une manière très avantageuse lorsque le procédé de récupération du copolymère est basé sur une élimination directe du solvant.

On peut évidemment enlever une partie du solvant de polymérisation avant de traiter le polymère selon le procédé de l'invention.

Ainsi, selon un mode d'exécution du procédé de l'invention, on traite le polymère avec un acide monocarboxylique aliphatique linéaire ou branché de formule générale R-COOH dans laquelle R comprend de 2 à 4 atomes de carbone. A titre d'exemple d'acides monocarboxyliques, on peut citer notamment les acides propionique, butyrique, valérique, crotonique.

La quantité d'acide à mettre en oeuvre est comprise entre 0,02 et 2,0 parties pour 100 parties de polymère et de préférence de 0,1 à 0,5 parties pour 100 parties de polymère.

Selon le procédé de la présente invention on peut ajouter à la solution de polymère les acides seuls ou en mélange entre eux ou en mélange avec un solvant comme le cyclohexane.

Selon un mode préféré d'exécution de la présente invention, l'acide monocarboxylique est ajouté à la solution de polymère après que le polymère ait été désactivé avec un terminateur de chaîne choisi parmi le groupe formé des monoépoxydes et des alcools parmi lesquels on peut citer les alkylphénols encombrés. De préférence on utilise les monoépoxydes et parmi ceux-ci préférentiellement l'oxyde de propylène.

En effet, la Demanderesse a trouvé que lorsque l'on introduit l'acide après la désactivation du polymère vivant, on obtient un polymère présentant de meilleures propriétés optiques que si le même acide est utilisé également comme terminateur de chaîne.

La Demanderesse a maintenant trouvé qu'en utilisant les acides de l'invention, on obtenait un polymère parfaitement transparent, mais en plus, celui-ci confère au polymère une certaine résistance à l'oxydation qui permet de réduire considérablement l'appoint en additif anti-oxydant secondaire généralement ceux du type phosphites et analogues.

Les exemples suivants sont donnés afin de mieux illustrer le procédé de la présente invention, mais sans pour autant en limiter la portée.

### Exemples 1 à 3

On a préparé un copolymère de type S₁-B₁-B/S-S₂ ayant un rapport pondéral styrène-butadiène de 75/25.

On introduit dans un réacteur pressurisé les quantités suivantes calculées pour 100 parties en poids de monomères de styrène et de 1.3-butadiène.

On a ainsi introduit d'abord 471 parts d'un mélange solvant constitué de 85% de cyclohexane et de 15% de n-hexane.

On a introduit ensuite du THF à raison de 0,07 phr et le styrène monomère à raison de 16,7 parts.

A ce moment la température du milieu réactionnel est portée à 65°C et on injecte du n-butyllithium sous forme d'une solution à 20% dans le cyclohexane de manière à disposer de 0,083 phr dans le milieu.

On a ensuite poursuivi la polymérisation séquencée en injectant simultanément 25 parts de 1,3-butadiène et 58,3 parts de styrène.

Pour les exemples 1 et 2, le polymère vivant ainsi formé est désactivé par addition de 0.7 phr d'oxyde de propylène. Pour l'exemple 3, on n'ajoute pas d'oxyde de propylène.

On introduit ensuite la quantité d'acide monocarboxylique indiquée dans le tableau ci-après ainsi qu'une faible quantité d'un système antioxydant constitué de 0,4 phr d'Irganox 1076 et 0,7 phr de TNPP. La solution obtenue à la fin de cette étape est incolore.

On a préparé des plaques de copolymère de plus ou moins 2 mm d'épaisseur après avoir sèché le caoutchouc.

On a traité la plaque pendant 20 minutes à 160°C et on en a évalué les propriétés optiques :

| | phr | Indice d'opacité | Transmittance | Indice de jaune |
|---|---|---|---|---|
| Ex. | | | | |
| 1. Acide propionique | 0,09 | 4,6 | 90,8 | 1,4 |
| | | | | |
| 2. Acide crotonique | 0,104 | 5,2 | 90,8 | 0,6 |
| | | | | |
| 3. Acide propionique | 0,09 | 5,9 | 88,9 | 4,2 |

Il ressort des exemples que l'introduction de l'acide après l'étape de désactivation (exemples 1 et 2) conduit à l'obtention d'un polymère présentant de meilleures propriétés optiques que si le même acide est utilisé également comme terminateur de chaîne (exemple 3).

## Revendications

1. Procédé pour décolorer les copolymères vinylaromatique-diène conjugué obtenus au départ d'une étape d'initiation de la (co)polymérisation effectuée au moyen de catalyseurs à base de métal alcalin, caractérisé en ce que l'on traite le copolymère avec un acide monocarboxylique de formule générale R-COOH dans laquelle R est un radical hydrocarboné comprenant de 2 à 4 atomes de carbone comprenant les radicaux aliphatiques linéaires ou branchés, cycloaliphatiques ou alcéniques.

2. Procédé selon la revendication 1, caractérisé en ce que l'acide monocarboxylique est introduit après la désactivation du polymère vivant.

3. Procédé selon l'une quelconque des revendications 1 à 2, caractérisé en ce que l'acide monocarboxylique est choisi parmi les acides propionique, butyrique, valérique, crotonique.

4. Procédé selon l'une quelconque des revendications 1 à 3, caractérisé en ce que le diène conjugué est choisi parmi le 1,3-butadiène, l'isoprène et le 2,3-diméthyl-1,3-butadiène.

5. Procédé selon l'une quelconque des revendications 1 à 4, caractérisé en ce que l'hydrocarbure vinylaromatique est choisi parmi le styrène, l'alpha-méthylstyrène, le vinyltoluène et le vinylnaphtalène.

6. Procédé selon l'une quelconque des revendications 1 à 5, caractérisé en ce que le copolymère est un copolymère séquencé diène conjugué/ vinylaromatique dont le rapport pondéral est compris entre 1:99 et 85:15.

7. Procédé selon la revendication 6, caractérisé en ce que le copolymère séquencé est un copolymère butadiène/styrène.

8. Procédé selon l'une quelconque des revendications 1 à 7, caractérisé en ce que l'on utilise l'acide monocarboxylique à raison de 0,02 à 2 parties pour 100 parties de copolymères et, de préférence, de 0,1 à 0,5 parties pour 100 parties de copolymères.

9. Procédé selon l'une quelconque des revendications 1 à 8, caractérisé en ce que l'on ajoute l'acide monocarboxylique directement à la solution de copolymère.

## Claims

1. Process for bleaching aromatic vinyl conjugate diene copolymers obtained from an initiation phase of the (co)polymerisation carried out by means of alkali metal-based catalysts, characterised in that the copolymer is treated with a monocarboxylic acid of the general formula R-COOH, wherein R is a hydrocarbon radical comprising 2 to 4 carbon atoms including linear or branched aliphatic radicals, cyclo-aliphatic or alkene radicals.

2. Process according to Claim 1, characterised in that the monocarboxylic acid is introduced after deactivation of the living polymer.

3. Process according to any one of Claims 1 to 2,
characterised in that the monocarboxylic acid is selected from propionic, butyric, valeric and crotonic acids.

4. Process according to any one of Claims 1 to 3,
characterised in that the conjugate diene is selected from 1,3-butadiene, isoprene and 2,3-dimethyl-1,3-butadiene.

5. Process according to any one of Claims 1 to 4,
characterised in that the aromatic vinyl hydrocarbon is selected from styrene, alpha-methyl styrene, vinyl toluene and vinyl naphthalene.

6. Process according to any one of Claims 1 to 5,
characterised in that the copolymer is a sequenced conjugate diene/aromatic vinyl copolymer, the weight ratio of which is in the range of between 1:99 and 85:15.

7. Process according to Claim 6, characterised in that the sequenced copolymer is a butadiene/styrene copolymer.

8. Process according to any one of Claims 1 to 7,
characterised in that the monocarboxylic acid is used to the amount of 0.02 to 2 parts per 100 parts of copolymer, and preferably from 0.1 to 0.5 parts per 100 parts of copolymer.

9. Process according to any one of Claims 1 to 8,
characterised in that the monocarboxylic acid is added directly to the copolymer solution.

## Patentansprüche

1. Verfahren zur Entfärbung von Copolymeren aus Vinylaromaten und konjugierten Dienen, welche ausgehend von einem Initiationsschritt der (Co)polymerisation erhalten werden, der mit Katalysatoren auf der Basis von Alkalimetall durchgeführt wird, dadurch gekennzeichnet, daß man das Copolymer mit einer Monocarbonsäure der allgemeinen Formel R-COOH behandelt, worin R ein Kohlenwasserstoffrest ist, der 2 bis 4 Kohlenstoffatome umfaßt, die lineare oder verzweigte, cycloaliphatische oder olefinische aliphatische Reste umfassen.

2. Verfahren nach Anspruch 1, dadurch gekennzeichnet, daß die Monocarbonsäure nach der Desaktivierung des lebenden Polymers zugesetzt wird.

3. Verfahren nach einem der Ansprüche 1 bis 2, dadurch gekennzeichnet, daß die Monocarbonsäure aus Propion-, Butter-, Valerian- und Crotonsäure ausgewählt wird.

4. Verfahren nach einem der Ansprüche 1 bis 3, dadurch gekennzeichnet, daß das konjugierte Dien aus dem 1,3-Butadien, dem Isopren und dem 2,3-Dimethyl-1,3-butadien ausgewählt wird.

5. Verfahren nach einem der Ansprüche 1 bis 4, dadurch gekennzeichnet, daß der vinylaromatische Kohlenwasserstoff aus dem Styrol, dem α-Methylstyrol, dem Vinyltoluol und dem Vinylnaphthalin ausgewählt wird.

6. Verfahren nach einem der Ansprüche 1 bis 5, dadurch gekennzeichnet, daß das Copolymer ein sequentielles Copolymer aus konjugierten Dienen/Vinylaromaten ist, worin das Gewichstsverhältnis von 1:99 bis 85:15 beträgt.

7. Verfahren nach Anspruch 6, dadurch gekennzeichnet, daß das Sequenz-Copolymer ein Butadien/Styrol-Copolymer ist.

8. Verfahren nach einem der Ansprüche 1 bis 7, dadurch gekennzeichnet, daß man die Monocarbonsäure in einer Menge von 0,02 bis 2 Teilen pro 100 Teile des Copolymeren und vorzugsweise von 0,1 bis 0,5 Teilen pro 100 Teile des Copolymer verwendet.

9. Verfahren nach einem der Ansprüche 1 bis 8, dadurch gekennzeichnet, daß man die Monocarbonsäure direkt zur Copolymerlösung dazugibt.
